# EUROPEAN PATENT APPLICATION

(11) **EP 4 693 698 A1**
(43) Date of publication of application: **11.02.2026**
(21) Application number: 23932759.6
(22) Date of filing: 31.10.2023
(51) Int. Cl.: H01M 50/531, H01M 50/528

(54) **BATTERY CELL, BATTERY PACK, AND ELECTRIC DEVICE**

(30) Priority: 14.04.2023 CN 202320939100 U
(71) Applicant: BYD Company Limited, Shenzhen, Guangdong 518118 (CN)
(72) Inventor: YU, Tao, Shenzhen, Guangdong 518118 (CN); ZHANG, Da, Shenzhen, Guangdong 518118 (CN); GUO, Guannan, Shenzhen, Guangdong 518118 (CN); HU, Haotian, Shenzhen, Guangdong 518118 (CN); PAN, Qiu, Shenzhen, Guangdong 518118 (CN)
(74) Representative: Aldridge, Henry Alexander
(86) International application number: PCT/CN2023/128551
(87) International publication number: WO 2024/212488

(57) **Abstract**

A battery cell (1000), a battery pack (2000), and an electric apparatus (3000) are provided. The battery cell includes a housing (500), a jelly roll (200), and a current collector (100). A first connection region (120) of the current collector includes a central portion (122) and a plurality of first connection portions (121) electrically connected to the jelly roll in a circumferential direction of the central portion. A straight-line distance between opposite side walls at a connection position of the first connection portion and the central portion is a connection width H, nKHδ≥C, where C is a minimum current-carrying requirement of the jelly roll, n is a quantity of the first connection portions, δ is a thickness of the first connection portion, and K is a current-carrying coefficient of the current collector.

## Description

### CROSS-REFERENCE TO RELATED APPLICATIONS

This application is based on and claims priority to Chinese Patent Application "BATTERY CELL, BATTERY PACK, AND ELECTRIC APPARATUS" with publication No. 2023209391005 and publication date April 14, 2023, which is incorporated herein as reference in its entirety.

### TECHNICAL FIELD

This application relates to the field of battery technologies, and in particular, relates to a battery cell, a battery pack, and an electric apparatus.

### BACKGROUND

In a conventional technology, in order to achieve electrical connection between a jelly roll and a housing, a current collector is usually disposed between the jelly roll and the housing, and the current collector is separately connected to the jelly roll and the housing.

However, a poor current-carrying capacity of an existing current collector causes problems such as insufficient current-carrying capacity and severe heat generation in the jelly roll. Consequently, a service life of the jelly roll is shortened. In other words, a service life of a battery cell is shortened and use safety of the battery cell is reduced.

### SUMMARY

Therefore, this application provides a battery cell. The battery cell can make a current collector to have a high current-carrying capacity, to improve use safety of the battery cell and prolong a service life of the battery cell.

A battery cell according to an embodiment of this application includes: a housing, where an accommodation cavity is formed in the housing; a jelly roll, where the jelly roll is disposed in the accommodation cavity; and a current collector, where the current collector includes a first connection region and a second connection region, the first connection region includes a central portion and a plurality of first connection portions, the plurality of first connection portions are sequentially arranged in a circumferential direction of the central portion, the plurality of first connection portions are separately connected to the central portion, the plurality of first connection portions are electrically connected to the jelly roll, the second connection region is located on a side of the first connection region, and the second connection region is electrically connected to the housing. A straight-line distance between opposite side walls at a connection position of the first connection portion and the central portion is a connection width H. A product of a quantity of the first connection portions, a current-carrying coefficient of the current collector, the straight-line distance between the opposite side walls at the connection position of the first connection portion and the central portion, and a thickness of the first connection portion is greater than or equal to a minimum current-carrying requirement of the jelly roll, that is, the following relational expression is satisfied: nKHδ≥C, where C is the minimum current-carrying requirement of the jelly roll, n is the quantity of the first connection portions, δ is the thickness of the first connection portion, and K is the current-carrying coefficient of the current collector.

According to the battery cell in this embodiment of this application, the current collector including the first connection region and the second connection region is disposed, so that the first connection region and the second connection region cooperate to implement an electrical connection between the jelly roll and the housing, and the battery cell can effectively operate. In addition, the connection width between the first connection portion and central portion in the first connection region is set based on parameters such as the minimum current-carrying requirement of the jelly roll and current-carrying coefficient of the current collector, to ensure that a current-carrying capacity of the first connection region can meet the minimum current-carrying requirement of the jelly roll, so that a current-carrying capacity of the current collector is ensured. In this way, problems such as insufficient current-carrying capacity and severe heat generation in the jelly roll are avoided, to prolong a service life of the jelly roll, that is, a service life of the battery cell is prolonged.

Optionally, the central portion and the plurality of first connection portions are integrally formed.

Optionally, the second connection region is formed as a circular ring structure, and the circular ring structure extends in a circumferential direction of the first connection region.

Optionally, an inner peripheral wall of the second connection region is connected to the central portion through a connection member.

Optionally, the connection member is inclined relative to the central portion, and extends toward the second connection region, so that the first connection region and the second connection region have a height difference.

Optionally, in the circumferential direction of the first connection region, the plurality of first connection portions and a plurality of connection members are alternately spaced apart.

Optionally, a circumferential distance between the first connection portion and the connection member ranges from 0.5 mm to 2 mm.

Optionally, on a first plane, an orthographic projection of an outer peripheral wall of the current collector is located in a first circle. The first plane is perpendicular to a thickness direction of the current collector. A radial width of the second connection region is W₁. The radial width of the second connection region is greater than or equal to 1 mm and less than or equal to half of a radius of the current collector, that is, 1mm≤W₁≤½R₁. R₁ is the radius of the current collector, and R₁ ranges from 10 mm to 100 mm.

Optionally, on the first plane, orthographic projections of outer peripheral walls of the plurality of first connection portions are separately located in a second circle. A radius of the second circle is greater than or equal to half of the radius of the current collector and less than the radius of the current collector, that is, the radius R₂ of the second circle and the radius R₁ of the current collector satisfy the following condition: ½R₁≤R₂<R₁.

Optionally, the first connection portion has a first surface connected to the jelly roll. The second connection region has a second surface connected to the housing. The first surface and the second surface are parallel to each other.

Optionally, on the first plane, the orthographic projection of the outer peripheral wall of the current collector is located in the first circle. The first plane is perpendicular to the thickness direction of the current collector. The second connection region is provided with a stop protrusion extending toward the first connection portion. The stop protrusion is located radially outside of the first connection portion. The stop protrusion is adapted to be located radially outside of a tab of the jelly roll.

Optionally, the stop protrusion is defined by bending and deforming a portion of the second connection region.

Optionally, the central portion is provided with a liquid injection port penetrating the central portion in a thickness direction of the central portion.

Optionally, on the first plane, the orthographic projection of the outer peripheral wall of the current collector is located in the first circle. The first plane is perpendicular to the thickness direction of the current collector. The second connection region is formed as a circular ring shape and is located radially outside the first connection region. The second connection region is connected to the central portion through the plurality of connection members. The plurality of first connection portions are evenly spaced apart, and each of the first connection portions is formed as a sector. The plurality of first connection portions and the plurality of connection members are alternately arranged in a circumferential direction.

A battery pack according to the embodiment of this application includes a plurality of battery cells.

According to the battery pack in this embodiment of this application, the foregoing battery cell is used, so that use safety of the battery pack can be improved, and a service life of the battery pack is prolonged.

An electric apparatus according to the embodiment of this application includes the foregoing battery pack.

According to the electric apparatus in this embodiment of this application, the foregoing battery pack is used, to improve use safety of the electric apparatus, so that a service life of the electric apparatus is prolonged, and use costs are reduced.

Additional aspects and advantages of this application will become apparent from the following description or will be learned through practice in this application.

### DESCRIPTION OF DRAWINGS

The above and/or additional aspects and advantages of this application will become apparent and easily understood from the descriptions of embodiments taken in conjunction with the following drawings.
FIG. 1 is a sectional view of a battery cell according to some embodiments of this application;
FIG. 2 is a diagram of a structure of a current collector according to some embodiments of this application;
FIG. 3 is a top view of a current collector according to some embodiments of this application;
FIG. 4 is a side view of a current collector according to some embodiments of this application;
FIG. 5 is a partial enlarged view of a region I in FIG. 4;
FIG. 6 is a diagram of a second connection region before and after movement according to some embodiments of this application;
FIG. 7 is a top view of a current collector according to some other embodiments of this application;
FIG. 8 is a diagram of a cooperation of a current collector and a cover plate according to some other embodiments of this application; and
FIG. 9 is a diagram of an electric apparatus according to some embodiments of this application.

### Reference numeral:

1000: battery cell; 100: current collector; 120: first connection region; 121: first connection portion; 122: central portion; 1221: liquid injection port; 1222: through opening; 1223: positioning opening; 130: second connection region; 1311: reinforcing portion; 1312: avoidance opening; 1313: stop protrusion; 132: limiting notch; 140: connection member; 200: electrode core; 300: cover plate; 310: limiting protrusion; 400: casing; 500: housing; 2000: battery pack; 3000: electric apparatus.

### DESCRIPTION OF EMBODIMENTS

The following describes embodiments of this application in detail, and examples of embodiments are illustrated in the accompanying drawings. Identical or similar reference numerals refer to the identical or similar elements or elements having the identical or similar functions throughout. The embodiments described below with reference to the accompanying drawings are exemplary and are merely used to describe this application, but cannot be understood as a limitation on this application.

The following describes a battery cell 1000 in embodiments of this application with reference to the accompanying drawings of the specification.

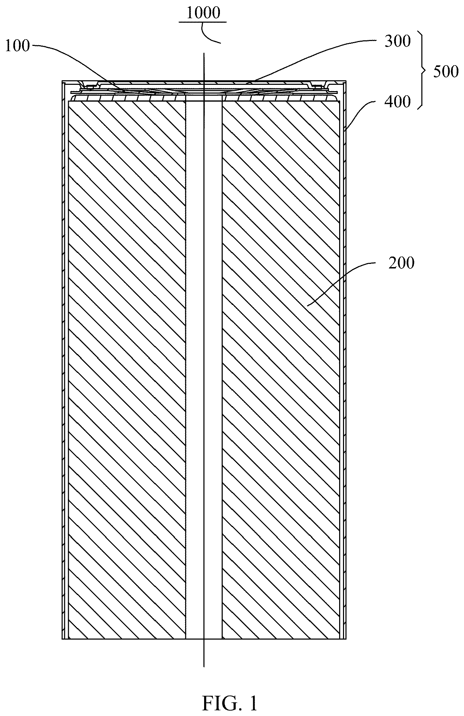

As shown in FIG. 1, the battery cell 10000 according to an embodiment of this application includes a housing 500, a jelly roll 200, and a current collector 100.

An accommodation cavity is formed in the housing 500.

the jelly roll 200 is disposed in the accommodation cavity. In other words, the jelly roll 200 is adapted to be disposed in the housing 500. This helps protect the jelly roll 200 by using the housing 500, prolong a service life of the jelly roll 200, and improve use safety of the jelly roll 200.

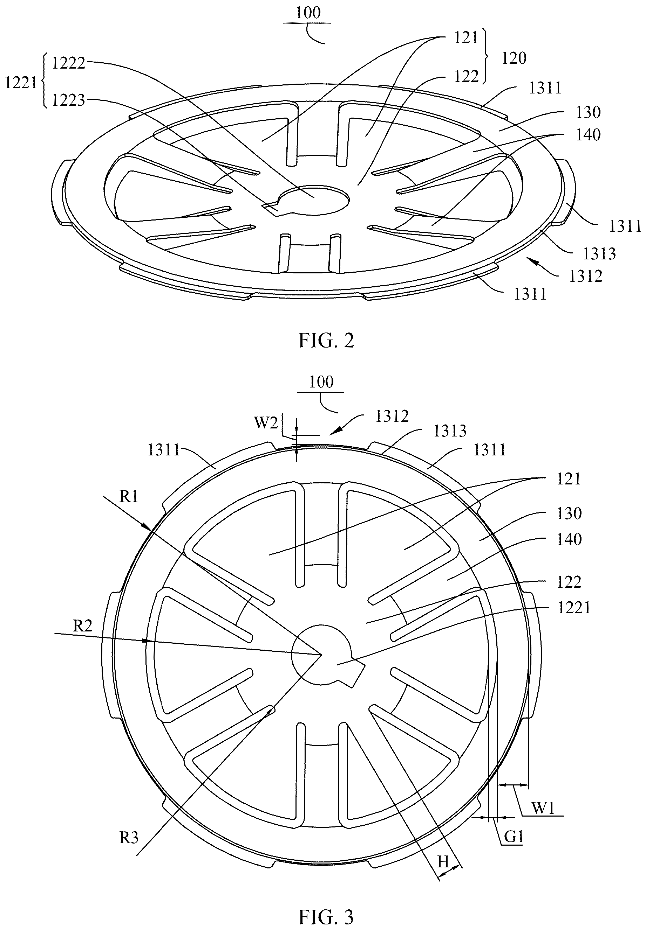

As shown in FIG. 2 and FIG. 3, the current collector 100 includes a first connection region 120 and a second connection region 130.

With reference to FIG. 1, FIG. 2, and FIG. 3, the first connection region 120 includes a central portion 122 and a plurality of first connection portions 121. The plurality of first connection portions 121 are sequentially arranged in a circumferential direction of the central portion 122. The plurality of first connection portions 121 are respectively connected to the central portion 122. The plurality of first connection portions 121 are electrically connected to the jelly roll 200, for an electrical connection between the first connection region 120 and the jelly roll 200.

As shown in FIG. 2 and FIG. 3, the second connection region 130 is located on a side of the first connection region 120. The second connection region 130 is electrically connected to the housing 500.

A straight-line distance between opposite side walls at a connection position of the first connection portion 121 and the central portion 122 is a connection width H. A product of a quantity of the first connection portions 121, a current-carrying coefficient of the current collector 100, the straight-line distance between the opposite side walls at the connection position of the first connection portion 121 and the central portion 122, and a thickness of the first connection portion 121 is greater than or equal to a minimum current-carrying requirement of the jelly roll 200, that is, the connection width H satisfies the following relational expression: nKHδ≥C.

C is the minimum current-carrying requirement of the jelly roll 200, n is the quantity of the first connection portions 121, δ is the thickness of first connection portion 121, and K is the current-carrying coefficient of the current collector 100.

It should be noted that the foregoing connection width H may also be understood as that the connection position between the first connection portion 121 and the central portion 122 has two side walls that are disposed opposite to each other, and the straight-line distance between the two side walls forms the connection width H between the first connection portion 121 and the central portion 122 (for details about the connection width H, refer to FIG. 3). A distinguishing boundary between the first connection portion 121 and the central portion 122 may be a straight line connecting the opposite side walls at the connection position of the first connection portion 121 and the central portion 122.

It can be learned from the foregoing structure that, the battery cell 1000 in this embodiment of this application is disposed with the current collector 100 that includes the first connection region 120 and the second connection region 130. The first connection region 120 cooperates with the second connection region 130 to implement an electrical connection between the jelly roll 200 and the housing 500.

In addition, the first connection region 120 is disposed to include the central portion 122 and the plurality of first connection portions 121 that are connected to each other. The plurality of first connection portions 121 are disposed to be sequentially arranged in the circumferential direction of the central portion 122. It ensures that the plurality of first connection portions 121 can all be connected to the central portion 122, and the central portion 122 and the plurality of first connection portions 121 support each other, to ensure structural stability of the first connection region 120, facilitate a connection between the jelly roll 200 and the first connection region 120, and reduce a connection difficulty. In addition, circumferential space of the central portion 122 can be properly used, to increase an area of the first connection portion 121, and further increase a connection area between the first connection portion 121 and the jelly roll 200, thereby improving a current-carrying capacity of the current collector 100.

The second connection region 130 is disposed to be located on the side of the first connection region 120, so that the first connection region 120 can be prevented from occupying space in a circumferential direction of the second connection region 130, and the second connection region 130 is prevented from occupying space in a circumferential direction of the first connection region 120. Therefore, there is sufficient space to dispose the first connection region 120 and the second connection region 130. This helps increase an area of the first connection region 120 and an area of the second connection region 130, further increase the connection area between the first connection portion 121 and the jelly roll 200, and increase a connection area between the second connection region 130 and the housing 500.

In other words, the current collector 100 in this application, the jelly roll 200, and the housing 500 all have sufficient connection area, to improve connection strength between first connection portion 121 and the jelly roll 200, and improve connection strength between the second connection region 130 and the housing 500, so that a position of the current collector 100 relative to the jelly roll 200 and the housing 500 is stable.

In addition, this application also creatively sets the connection width between the first connection portion 121 and the central portion 122, that is, the straight-line distance between the opposite side walls at the connection position of the first connection portion 121 and the central portion 122 is defined, so that the straight-line distance between the opposite side walls at the connection position of the first connection portion 121 and the central portion 122 satisfies: nKHδ≥C. This ensures a current-carrying area of the current collector 100 and improves a current-carrying capacity of the current collector 100, to avoid insufficient current-carrying capacity in the jelly roll 200 caused by a small current-carrying area of the current collector 100, and to avoid a problem of severe heat generation in the jelly roll 200, thereby prolonging the service life of the jelly roll 200, improving the use safety of the jelly roll 200. In other words, a service life of the battery cell 1000 is prolonged, and use safety of the battery cell 1000 is improved.

It should be noted that, in the foregoing relational expression, the current-carrying coefficient K of the current collector 100 may be directly determined based on a material of the current collector 100 and is in units of Ah/mm². The minimum current-carrying requirement C of the jelly roll 200 may be determined based on a required charging time of the jelly roll 200. A specific determining manner is that during an actual production process of the battery cell 1000, a fast charging time that needs to be met by a to-be-produced battery cell 1000 may be directly determined. In other words, a charging time of the battery cell 1000 may be clearly learned. A charging time of the jelly roll 200 is determined based on the charging time of the battery cell 1000. Then, the minimum current-carrying requirement C of the jelly roll 200 is obtained based on the charging time of the jelly roll 200. Finally, the connection width H between the first connection portion 121 and the central portion 122 is calculated based on the minimum current-carrying requirement C. In this way, the connection width H between the first connection portion 121 and the central portion 122 and the minimum current-carrying requirement C of the jelly roll 200 can meet a specific condition. This ensures that the current-carrying capacity of the current collector 100 can meet the minimum current-carrying requirement of the jelly roll 200, to avoid causing insufficient current-carrying capacity in the jelly roll 200, and to avoid the problem of severe heat generation in the jelly roll 200, so that the service life of the jelly roll 200 is prolonged, and the use safety of the jelly roll 200 is improved.

It may be understood that, in compared with a conventional technology, the current collector 100 in this application can effectively implement the electrical connection between the jelly roll 200 and the housing 500, which ensures that the current collector 100 has a specific current-carrying area and improves the current-carrying capacity of the current collector 100, so that the use safety of the battery cell 1000 is improved and the service life of the battery cell 1000 is prolonged.

In some specific examples, the minimum current-carrying requirement C of the jelly roll 200 ranges from 15Ah to 120Ah.

Optionally, the material of the current collector 100 may be an aluminum alloy, pure copper, nickel-plated copper, or the like, so that the current collector 100 has a conductive function. This helps facilitate the electrical connection between the jelly roll 200 and the housing 500 through the current collector 100.

In some examples, the jelly roll 200 includes a tab. The plurality of first connection portions 121 are electrically connected to the tab, for an electrical connection between the current collector 100 and the jelly roll 200.

It should be noted that the tab herein may be a flattened or patted full-tab structure, or may be a laser-cleaned or die-cut multi-tab structure.

When the material of the current collector 100 is an aluminum alloy, the current collector 100 is mainly connected to a positive tab of the jelly roll 200 in a fitting manner. When the material of the current collector 100 is pure copper or nickel-plated copper, the current collector 100 is mainly connected to a negative tab of the jelly roll 200 in a fitting manner. In other words, a person skilled in the art may select the material of the current collector 100 based on an application environment of the current collector 100. This application is not specifically limited.

In descriptions of this application, a feature defined with "first" and "second" may explicitly or implicitly include one or more of the features, and is used to distinguish and describe the features without any sequence or weight.

In some examples, as shown in FIG. 2 and FIG. 3, the second connection region 130 is located radially outside the first connection region 120, to properly arrange relative positions of the first connection region 120 and the second connection region 130, so that the area of the first connection region 120 and the area of the second connection region 130 is ensured.

Optionally, as shown in FIG. 1, the housing 500 includes a casing 400 and a cover plate 300. The accommodation cavity with an opening is formed in the casing 400. the jelly roll 200 is disposed in the accommodation cavity. The cover plate 300 is disposed at the opening. The current collector 100 is disposed between the jelly roll 200 and the cover plate 300. The first connection portion 121 is electrically connected to the jelly roll 200. The second connection region 130 is electrically connected to the cover plate 300, for an electrical connection between the jelly roll 200 and the cover plate 300. In other words, in this example, the second connection region 130 is mainly electrically connected to the cover plate 300.

It should be noted that the accommodation cavity with the opening is formed in the casing 400, the opening is adapted to implement communication between interior and exterior of the accommodation cavity, to ensure that an external component (for example, the current collector 100, the jelly roll 200, and the like) can be disposed in the accommodation cavity. The cover plate 300 is disposed at the opening, so that the opening can be blocked by using the cover plate 300 to prevent an external foreign object, dust, and the like from entering the accommodation cavity through the opening, to improve the use safety of the jelly roll 200, that is, the use safety of the battery cell 1000 is improved.

In some other examples, the housing 500 includes a casing 400 and a cover plate 300. The accommodation cavity with an opening is formed in the casing 400. the jelly roll 200 is disposed in the accommodation cavity. The cover plate 300 is disposed at the opening. The current collector 100 is disposed between the jelly roll 200 and the casing 400. The first connection portion 121 is electrically connected to the jelly roll 200. The second connection region 130 is electrically connected to the casing 400, for an electrical connection between the jelly roll 200 and the casing 400. In other words, in this example, the second connection region 130 is mainly electrically connected to the casing 400 (this example is not shown in the figure).

In some embodiments of this application, the central portion 122 and the plurality of first connection portions 121 are integrally formed. Herein, it may be understood that the central portion 122 and the plurality of first connection portions 121 are made by using an integrated molding process, to reduce a difficulty in connecting the central portion 122 to the plurality of first connection portions 121, so that connection efficiency is improved, connection strength between the central portion 122 and the plurality of first connection portions 121 is further improved, and relative positions of the central portion 122 and the plurality of first connection portions 121 is stable, that is, a structure of the first connection region 120 is stable. This facilitates the electrical connection between the current collector 100 and the jelly roll 200 through the first connection region 120.

In some examples, the current collector 100 is an integrally formed member. In other words, the central portion 122 and the plurality of first connection portions 121 are disposed to be integrally formed, and the first connection region 120 and the second connection region 130 are also integrally formed. As a result, the entire current collector 100 can be made by using the integrated molding process, so that manufacturing difficulty of the current collector 100 is reduced, manufacturing efficiency is improved, and connection strength and connection quality among the central portion 122, the first connection portion 121, and the second connection region 130 can further be ensured at the same time, and a structure of the current collector 100 is stable. This facilitates the electrical connection between the jelly roll 200 and the housing 500 through the current collector 100.

It should be noted that, in a process of producing the current collector 100, the current collector 100 may be cut, to form structures such as the central portion 122, the first connection portion 121, and the second connection region 130 on the current collector 100.

In some embodiments of this application, as shown in FIG. 2 and FIG. 3, the second connection region 130 is formed as a circular ring structure, and the circular ring structure extends in a circumferential direction of the first connection region 120. In a first aspect, the circular ring structure helps dispose the second connection region 130 to extend in the circumferential direction of the first connection region 120, to ensure the area of the second connection region 130. In a second aspect, the circular ring structure may further enhance structural strength of the second connection region 130, and prolong a service life of the second connection region 130. In addition, the circular ring structure may further enable the second connection region 130 to form an integral member. This facilitates processing of the second connection region 130 and reduces manufacturing difficulty of the second connection region 130.

In addition, the second connection region 130 is disposed to form the circular ring structure, in a process of connecting the second connection region 130 to the housing 500, an entire circle of the second connection region 130 can be connected to the housing 500 without a need for disposing separate an error-proof mechanism, to reduce a difficulty in connecting the second connection region 130 to the housing 500.

In other words, in this application, the second connection region 130 is disposed as the circular ring structure, so that the second connection region 130 has a large connection area. In addition, the structural strength of the second connection region 130 can be enhanced, the service life of the second connection region 130 is prolonged, the manufacturing difficulty of the second connection region 130 is reduced, and the difficulty in connecting the second connection region 130 to the housing 500 is reduced.

In a specific example, the second connection region 130 is formed as a circular ring plate, and the circular ring plate is made of conductive materials such as aluminum and copper, for an electrical connection between the second connection region 130 and the housing 500.

Optionally, an inner diameter of the second connection region 130 is greater than an outer diameter of the first connection region 120. In this way, the second connection region 130 located in the circumferential direction of the first connection region 120 is disposed to be located radially outside the first connection region 120, so that the area of the first connection portion 121 and the area of the second connection region 130 are increased.

Optionally, as shown in FIG. 2, FIG. 3, and FIG. 4, the second connection region 130 is connected to the central portion 122 through a connection member 140, for a fastening connection between the second connection region 130 and the central portion 122. This helps support the second connection region 130 by using the central portion 122, improve position stability of the second connection region 130, and further facilitate an electrical connection between the current collector 100 and the housing 500 through the second connection region 130.

In addition, a mutual connection between the second connection region 130 and the first connection region 120 may further be implemented by disposing the connection member 140. This facilitates the electrical connection between the jelly roll 200 and the housing 500 through the current collector 100.

It should be noted that, while a fastening connection between the second connection region 130 and the first connection region 120 is implemented by disposing the connection member 140, a difficulty in connecting the second connection region 130 to the first connection region 120 can further be reduced, and the connection efficiency is improved.

In a specific example, when the current collector 100 is produced, a structure between the second connection region 130 and the central portion 122 is cut to form the connection member 140. Then, the connection member 140 may further be bent to reduce a molding difficulty of the current collector 100, and improve connection strength among the connection member 140, the second connection region 130, and the central portion 122 at the same time.

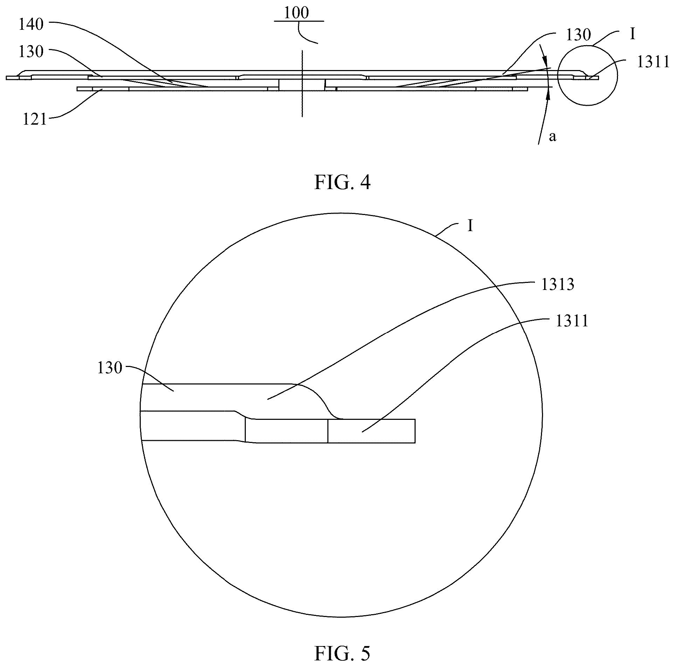

Optionally, as shown in FIG. 2 and FIG. 4, the connection member 140 is inclined relative to the central portion 122, and extends toward the second connection region 130, so that the first connection region 120 and the second connection region 130 have a height difference. Herein, it may also be understood that the connection member 140 is disposed to be inclined relative to the central portion 122, and extends toward the second connection region 130, while the fastening connection between the central portion 122 and the second connection region 130 is implemented through the connection member 140, it may further ensure that, after the connection member 140 is connected, the central portion 122 and the second connection region 130 are spaced apart in a height direction of the battery cell 1000. In this way, the second connection region 130 and the first connection portion 121 have a height difference, and the first connection region 120 and the second connection region 130 also have the height difference, so that the electrical connection between the jelly roll 200 and the housing 500 is implemented through the current collector 100.

It should be noted that the foregoing height difference may be understood as the height difference in the height direction of the battery cell 1000. The first connection region 120 and the second connection region 130 are spaced apart. In other words, the first connection region 120 and the second connection region 130 are disposed at different heights in the battery cell 1000.

It should be noted that, in the conventional technology, the jelly roll 200 and the housing 500 are spaced apart. As a result, the jelly roll 200 and the housing 500 have a specific height. In this application, the first connection region 120 and the second connection region 130 are disposed to have a specific height difference, so that the current collector 100 can have a specific height. In this way, the electrical connection between the jelly roll 200 and the housing 500 is implemented through the current collector 100, and bending the current collector 100 to increase a height is avoided, to reduce bending process and improve the connection efficiency, so that damage to the current collector 100 and stress concentration caused by bending of the current collector 100 can be avoided, a service life of the current collector 100 is prolonged, and the structural strength of the current collector 100 is enhanced.

In addition, in this application, the first connection region 120 and the second connection region 130 are directly disposed to have the specific height difference, which can reduce space occupied by the current collector 100 in a height direction compared to increasing the height by bending the current collector. In this way, a height of the jelly roll 200 can be correspondingly increased, so that a capacity of the jelly roll 200 is increased, and a capacity of the battery cell 1000 is increased. In other words, in this application, the first connection region 120 and the second connection region 130 are creatively disposed to the relative positions, and the electrical connection between the jelly roll 200 and the housing 500 is implemented through the current collector 100 without a need for bending the structure of the current collector 100, to improve the connection efficiency. In addition, breakage of the current collector 100 can further be avoided, so that the service life of the current collector 100 is prolonged, the structural strength of the current collector 100 is enhanced, the manufacturing difficulty of the current collector 100 is further reduced at the same time, and the capacity of the jelly roll 200 is increased.

In other words, in this application, the first connection region 120 and the second connection region 130 are creatively disposed to the relative positions, and the electrical connection between the jelly roll 200 and the housing 500 is implemented through the current collector 100 without a need for bending the structure of the current collector 100, to improve the connection efficiency. In addition, breakage of the current collector 100 can further be avoided, so that the service life of the current collector 100 is prolonged, the structural strength of the current collector 100 is enhanced, the manufacturing difficulty of the current collector 100 is further reduced at the same time, and the capacity of the jelly roll 200 is increased.

In a specific example, because the first connection region 120 and the second connection region 130 have the height difference, when the housing 500 is connected to the jelly roll 200 through the current collector 100, the first connection region 120 may first be connected to the jelly roll 200. Because the first connection region 120 and the second connection region 130 have the height difference in the height direction of the battery cell 1000, after the first connection region 120 is connected to the jelly roll 200, the second connection region 130 may be disposed to close to the housing 500 in a process of mounting the housing 500, to reduce the difficulty in connecting the second connection region 130 to the housing 500. It should be noted that the current collector 100, as a conductive element, is usually made of a metal conductive material of copper, aluminum, and iron, which naturally has features such as elasticity and deformation. The first connection region 120 and the second connection region 130 are disposed to have the height difference, and a position change may occur between the first connection region 120 and the second connection region 130 under an action of an external force. In other words, when the housing 500 is connected, the housing 500 presses and is connected to the second connection region 130 of the current collector 100. In this way, the first connection region 120 and the second connection region 130 can be relatively moved.

Optionally, the connection member 140 is a plate body. When the plate body is inclined and extends relative to the first connection portion 121, it can be ensured that the connection member 140 can move and/or deform relative to the first connection portion 121 under the action of the external force, to ensure that the first connection region 120 and the second connection region 130 can be relatively moved, to change a height of the current collector 100, so that a use range of the current collector 100 is expanded. The connection member 140 is constructed as an inclined and extended plate body. This further facilitates movement and/or deformation, and further facilitates relative movement adjustment of a position of the second connection region 130.

The movement and/or deformation described herein may be understood as that the connection member 140 is constructed to be movable relative to the first connection portion 121. Alternatively, the connection member 140 is constructed to be deformable relative to the first connection portion 121. Alternatively, the connection member 140 is constructed to be movable relative to the first connection portion 121 or deformable relative to the first connection portion 121, to change a height difference between the first connection portion 121 and the second connection region 130 by using the connection member 140, and the first connection region 120 and the second connection region 130 are relatively movable, so that the position of the second connection region 130 relative to the first connection portion 121 is adjusted, that is, the position of the second connection region 130 relative to the housing 500 is adjusted.

In other words, the first connection region 120 and the second connection region 130 in this application have the height difference, and may also move relatively. The relative movement described herein may be understood as that the first connection region 120 may move relative to the second connection region 130. Alternatively, the second connection region 130 may move relative to the first connection region 120. Alternatively, the first connection region 120 and the second connection region 130 may move relative to each other.

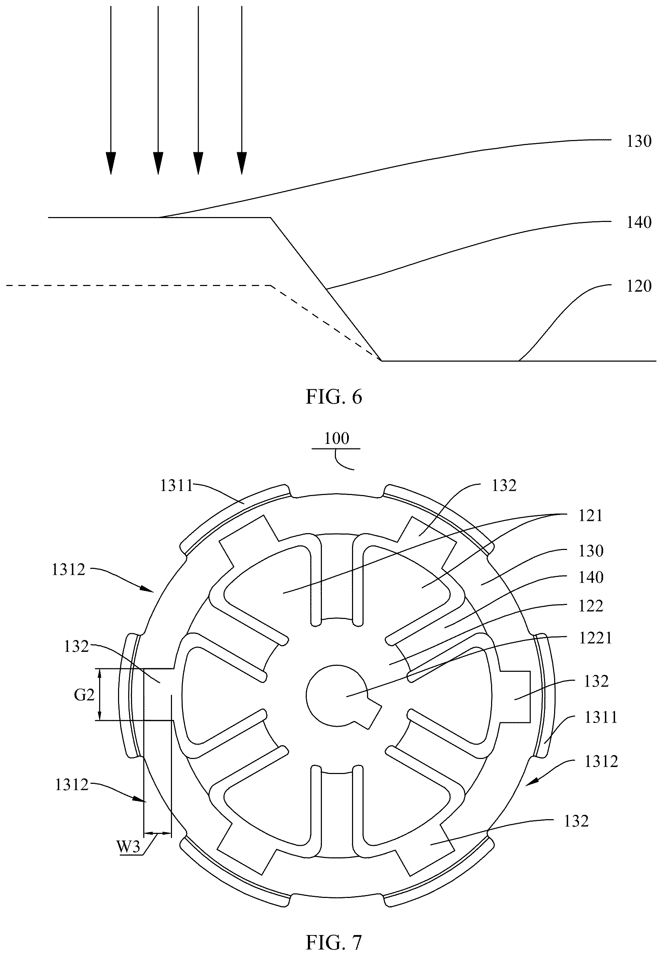

FIG. 6 is a diagram a second connection region 130 before and after movement. A solidline part is a position of the second connection region 130 before movement, and a dashed-line part is a position of the second connection region 130 after movement.

In addition, the first connection region 120 and the second connection region 130 are disposed to be relatively movable, in a process of connecting the current collector 100 to the housing 500, a problem that there is a welding gap between the current collector 100 and the housing 500 caused by a change in positions of the housing 500 and the jelly roll 200 can be avoided, and a problem that there is the welding gap between the current collector 100 and the housing 500 caused by a large difference in flatness of a plurality of welding positions on the housing 500 or a large difference in flatness of the second connection region 130 can further be avoided at the same time, to reduce a possibility of false welding between the current collector 100 and the housing 500 and ensure a yield of the battery cell 1000.

Specifically, when a flatness of a connection surface on which the housing 500 cooperates with the second connection region 130 is large, the second connection region 130 can adaptively adjust a relative position between the second connection region 130 and the first connection portion 121 based on a flatness of the housing 500. This further improves connection strength between the second connection region 130 and the housing 500, and ensures a fitting degree of a relative contact surface of the second connection region 130 and the housing 500, to reduce a possibility of false welding and subsequently ensure the yield of the battery cell 1000.

Herein, it may be understood that, when the current collector 100 in this application is connected to the housing 500, the current collector 100 may absorb a manufacturing error of the housing 500 by using the second connection region 130. This facilitates a subsequent improvement in manufacturing precision of the battery cell 1000.

In addition, the first connection region 120 and the second connection region 130 are disposed to be relatively movable. In this way, the space occupied by the current collector 100 in the height direction can be further reduced. When the jelly roll 200 is connected to the housing 500 through the current collector 100, a height of reserved space between the jelly roll 200 and the housing 500 may be reduced, and the height of the jelly roll 200 may also be increased, so that the capacity of the jelly roll 200 is increased, and the capacity of the battery cell 1000 is increased.

In a specific example, because the first connection region 120 and the second connection region 130 have the height difference and are relatively movable, when the housing 500 is connected to the jelly roll 200 through the current collector 100, the first connection region 120 may first be connected to the jelly roll 200. Because the first connection region 120 and the second connection region 130 have the height difference in the height direction of the battery cell 1000, after the first connection region 120 is connected to the jelly roll 200, the second connection region 130 may be disposed to close to the housing 500 in the process of mounting the housing 500, to reduce the difficulty in connecting the second connection region 130 to the housing 500. In addition, because the first connection region 120 and the second connection region 130 are relatively movable, when the second connection region 130 is connected to the housing 500, it can be ensured that the position of the second connection region 130 can change based on a position, a shape, a surface structure, and the like of the housing 500. In this way, the second connection region 130 can be effectively connected to the housing 500, to ensure connection strength and a connection area, so that a connection between the housing 500 and the jelly roll 200 is implemented through the current collector 100. This reduces the possibility of false welding between the current collector 100 and the housing 500, and ensures the yield of the battery cell 1000.

In a specific example, the connection member 140 is formed as a rectangular plate. This facilitates the fastening connection between the second connection region 130 and the central portion 122 through the connection member 140. In addition, after a completed connection is ensured, the second connection region 130 may be located radially outside the first connection region 120 and may drive the connection member 140 into motion under the action of the external force.

Certainly, in some other examples, the connection member 140 may be further formed as a square plate, a sector plate, and the like. This is not specifically limited in this application.

In a specific example, because the connection member 140 may be movable and/or deformable relative to the first connection portion 121, when the current collector 100 is separately connected to the jelly roll 200 and the housing 500, if the manufacturing error occurs in the housing 500, a welding position protruding toward the jelly roll 200 generates a force that drives a corresponding second connection region 130 to move toward the jelly roll 200. In addition, the second connection region 130 is connected to the first connection portion 121 through the inclined and extended plate body, and the inclined and extended plate body is likely to change position or deform under the action of the external force. In this case, when the housing 500 drives the corresponding second connection region 130 to move toward the jelly roll 200, the second connection region 130 may drive the inclined and extended plate body into motion. This ensures that the second connection region 130 can effectively move, and also ensures that the second connection region 130 can change the position based on the position of the housing 500. In this way, the second connection region 130 can be connected to the housing 500, a fit clearance between the second connection region 130 and the housing 500 is avoided, a fitting degree of a relative contact surface of the current collector 100 and the housing 500 is ensured, and the possibility of false welding is reduced.

It should be noted that the foregoing second connection region 130 may drive the inclined and extended plate body into motion. A specific action of the plate body may be: The second connection region 130 drives one end of the plate body connected to the second connection region 130 to move toward the jelly roll 200, the other end of the plate body is fastened relative to the jelly roll 200 in a process of moving the one end of the plate body, making the entire plate body rotating toward the jelly roll 200, for a movement of the connection member 140 relative to the first connection portion 121. Alternatively, the second connection region 130 drives one end of the plate body connected to the second connection region 130 to bend toward the jelly roll 200, the other end of the plate body is fastened relative to the jelly roll 200 in a process of bending, for deformation of the connection member 140 relative to the first connection portion 121.

Optionally, the connection member 140 is made of conductive materials such as aluminum or copper. While the first connection region 120 is connected to the second connection region 130 through the connection member 140, it is ensured that the second connection region 130 can effectively drive an inclined and extended connection member 140 into motion under the action of the external force. In this way, the connection member 140 can effectively move and/or deform relative to the first connection region 120, to change the height difference between the first connection region 120 and the second connection region 130.

It should be noted that a specific length, a width, and a thickness of the connection member 140 are not limited in this application. It is ensured that the connection between the first connection region 120 and the second connection region 130 can be effectively implemented through the connection member 140, and that the second connection region 130 can effectively drive the inclined and extended connection member 140 into motion under the action of the external force.

Certainly, in some other examples, the connection member 140 may alternatively be a buffer spring. One end of the buffer spring is connected to the second connection region 130. The other end of the buffer spring is connected to the first connection region 120. In this way, the connection member 140 is constructed to be movable relative to the first connection region 120 and/or deformable relative to the first connection region 120, to change the height difference between the first connection region 120 and the second connection region 130.

In a specific example, when the connection member 140 is the buffer spring and the current collector 100 is separately connected to the jelly roll 200 and the housing 500, if the difference in the flatness of the plurality of welding positions on the housing 500 is large, the welding position protruding toward the jelly roll 200 generates the force that drives the corresponding second connection region 130 to move toward the jelly roll 200, and the second connection region 130 compresses the buffer spring, making the buffer spring to deform, so that the height difference between the first connection region 120 and the second connection region 130 is changed.

In some examples, an inclination angle of the connection member 140 relative to the central portion 122 is greater than or equal to 5° and less than or equal to 90°. In other words, an inclination angle range of the connection member 140 relative to the central portion 122 is 5°≤a<90°. When the inclination angle range of the connection member 140 relative to the central portion 122 is less than 5°, an overall height of the current collector 100 is low. In this case, the current collector 100 fails to effectively implement the electrical connection between the jelly roll 200 and the housing 500. When the inclination angle range of the connection member 140 relative to the central portion 122 is greater than or equal to 90°, the overall height of the current collector 100 is high, and space occupied by the current collector 100 is large. In this case, the current collector 100 occupies layout space of the jelly roll 200, which leads to a reduction in the capacity of the jelly roll 200. In addition, the connection member 140 cannot effectively drive the second connection region 130 to move, that is, the connection member 140 fails to effectively change the height difference between the first connection region 120 and the second connection region 130. In this case, a problem of false welding caused by the manufacturing error cannot be resolved.

Therefore, in this application, a range of an inclination angle a of the connection member 140 relative to the central portion 122 is set to 5°≤a<90°. While ensuring that the electrical connection between the jelly roll 200 and the housing 500 can be effectively implemented by using the current collector 100, the height difference between the first connection region 120 and the second connection region 130 can also be effectively changed by using the connection member 140, and an excessively high overall height of the current collector 100 can be avoided, to ensure the capacity of the jelly roll 200.

In a specific example, the inclination angle a of the connection member 140 relative to the central portion 122 may be 5°, 10°, 20°, 30°, 40°, 50°, 60°, 70°, 80°, or the like.

Optionally, a height range between the first connection region 120 and the second connection region 130 is 1 mm to 10 mm. A specific height value between the first connection region 120 and the second connection region 130 may be adjusted based on the inclination angle a of the connection member 140. The height range between the first connection region 120 and the second connection region 130 is set to be 1 mm to 10 mm, so that the inclination angle a of the connection member 140 relative to the central portion 122 can be range from 5° to 90°, the height difference between the first connection region 120 and the second connection region 130 can also be effectively changed by using the connection member 140, and the excessively high overall height of the current collector 100 can be avoided, to ensure the capacity of the jelly roll 200.

In a specific example, a height between the first connection region 120 and the second connection region 130 may be 1 mm, 3 mm, 5 mm, 8 mm, 10 mm, or the like.

It should be noted that the foregoing height between the first connection region 120 and the second connection region 130 may be understood as a distance between surfaces of the second connection region 130 and the first connection portion 121 that face each other in the height direction of the battery cell 1000.

Specifically, with reference to FIG. 2 and FIG. 3, the first connection region 120 includes the central portion 122 and the plurality of first connection portions 121. The central portion 122 is formed as a circular aluminum plate or a circular copper plate, and the first connection portion 121 is formed as a sector aluminum plate or a sector copper plate. The plurality of first connection portions 121 are disposed around an outer periphery of the central portion 122 and are separately connected to the central portion 122, and the plurality of first connection portions 121 are spaced apart. The connection member 140 formed as a rectangular aluminum plate or a rectangular copper plate is disposed between two adjacent first connection portions 121. The connection member 140 and the first connection portion 121 are spaced apart in the circumferential direction of the first connection region 120. A first end of the connection member 140 is, in a radial direction of the first connection region 120, connected to the central portion 122.

With reference to FIG. 2 and FIG. 3, the second connection region 130 is formed as a circular ring aluminum plate or a circular ring copper plate. The second connection region 130 is disposed around an outer circumference of the first connection region 120. A second end of the connection member 140 is, in the radial direction of the first connection region 120, connected to the second connection region 130. The connection member 140 is inclined and extends relative to the first connection region 120, so that the first connection region 120 and the second connection region 130 are spaced apart in the height direction of the battery cell 1000.

In a specific example, when the current collector 100 is separately connected to the jelly roll 200 and the housing 500, the first connection region 120 is first connected to the jelly roll 200. Because the first connection region 120 and the second connection region 130 have the height difference in the height direction of the battery cell 1000, the housing 500 can effectively be in contact with and cooperate with the second connection region 130 in a process of mounting the housing 500. In addition, in a process of connecting the housing 500 to the second connection region 130, if there is the welding position protruding toward the jelly roll 200 on the housing 500, the welding position drives the second connection region 130 to move toward the jelly roll 200, and the second connection region 130 drives the second end of the connection member 140 to rotate around the first end of the connection member 140 toward the jelly roll 200, or drive the second end of the connection member 140 to bend toward the jelly roll 200, to achieve an objective of using the housing 500 to drive the connection member 140 to move and/or deform relative to the first connection region 120, and change the height of the current collector 100, so that the current collector 100 can be effectively connected to the housing 500, the fitting degree of the relative contact surface of the current collector 100 and the housing 500 is ensured, and the possibility of false welding is reduced.

Optionally, as shown in FIG. 2 and FIG. 3, the plurality of first connection portions 121 and a plurality of connection members 140 are alternately spaced apart in the circumferential direction of the first connection region 120. Herein, the current collector 100 in this application includes the plurality of connection members 140. The plurality of connection members 140 are disposed, so that the plurality of connection members 140 cooperate to enhance connection strength between the second connection region 130 and the central portion 122, and the position of the second connection region 130 is stable.

In addition, the plurality of first connection portions 121 and the plurality of connection members 140 are alternately spaced apart, so that one connection member 140 is disposed between two adjacent first connection portions 121. Correspondingly, one first connection portion 121 is disposed between two adjacent connection members 140, so that space of the current collector 100 is properly used. In this way, the plurality of first connection portions 121 and the plurality of connection members 140 can be disposed together on the same current collector 100. This helps increase the overflow area of the current collector 100 by using the plurality of first connection portions 121, and it is ensured that the second connection region 130 can be connected to the central portion 122 through the connection member 140.

It should further be noted that the connection member 140 and the first connection portion 121 are spaced apart, to prevent the first connection portion 121 from obstructing deformation and/or movement of the connection member 140. In other words, it is ensured that the connection member 140 can be effectively moved and/or deformed relative to the central portion 122, to change the height difference between the first connection region 120 and the second connection region 130, and eliminate effect of false welding caused by the manufacturing error.

In some examples, as shown in FIG. 3, the plurality of first connection portions 121 are spaced apart, and the connection member 140 is disposed between two adjacent first connection portions 121, so that the plurality of first connection portions 121 and the plurality of connection members 140 can be alternately disposed in a circumferential direction of the central portion 122, and the plurality of first connection portions 121 and the plurality of connection members 140 is disposed together on the current collector 100.

Optionally, a circumferential distance between the first connection portion 121 and the connection member 140 ranges from 0.5 mm to 2 mm. The circumferential distance between the first connection portion 121 and the connection member 140 herein may be understood as a distance between the first connection portion 121 and the connection member 140 in a circumferential direction of the current collector 100, so that the connection member 140 and the first connection portion 121 are spaced apart, and it is ensured that the connection member 140 can be effectively movable and/or deformable relative to the central portion 122.

In some embodiments of this application, as shown in FIG. 2, the first connection portion 121 and an inner peripheral wall of the second connection region 130 are spaced apart to form a spacing gap. A value range of a radial dimension G₁ of an orthographic projection of the spacing gap on a first plane is 0.5 mm to 2 mm. The first plane is perpendicular to a thickness direction of the current collector 100. The first connection portion 121 and the inner peripheral wall of the second connection region 130 are spaced apart, and the spacing gap is formed between the first connection portion 121 and the inner peripheral wall of the second connection region 130. The radial dimension of the orthographic projection of the spacing gap on a plane perpendicular to the height direction of the battery cell 1000 is G₁, and the value range of G₁ is 0.5 mm to 2 mm. When G₁ is less than 0.5 mm to 2 mm, a distance between the first connection portion 121 and the second connection region 130 is small. As a result, the first connection portion 121 and the second connection region 130 cannot achieve relative positioning, the height difference between the first connection portion 121 and the second connection region 130 cannot be effectively present, and it is difficult to reduce a difficulty in forming the current collector 100. When the G₁ is greater than 2 mm, the area of the first connection portion 121 and/or the area of the second connection region 130 are/is reduced. In other words, the connection area between the first connection portion 121 and the jelly roll 200 is reduced, and/or the connection area between the second connection region 130 and the housing 500 is reduced. In this case, the current-carrying capacity of the current collector 100 is poor, and position stability after the current collector 100 is connected cannot be ensured.

Therefore, in this application, the radial dimension G₁ of the orthographic projection of the spacing gap, formed between the first connection portion 121 and the inner peripheral wall of the second connection region 130 that are spaced apart, on a plane perpendicular to the height direction of the battery cell 1000 is set from 0.5 mm to 2 mm. In this way, while the height difference between the first connection portion 121 and the second connection region 130 can be effectively ensured, the area of the first connection portion 121 and the area of the second connection region 130 are ensured.

In some specific examples, the radial dimension G₁ of the orthographic projection of the spacing gap, formed between the first connection portion 121 and the inner peripheral wall of the second connection region 130 that are spaced apart, on a plane perpendicular to the height direction of the battery cell 1000 may be 0.5 mm, 1 mm, 1.5 mm, or 2 mm.

In some examples, as shown in FIG. 3, a spacing between opposite side walls of each first connection portion 121 gradually increases in a direction away from the central portion 122, to increase the area of the first connection portion 121, and ensure that the first connection portion 121 and the tab of the jelly roll 200 have a sufficient connection area, so that a large current-carrying area of the current collector 100 is ensured. This avoids the insufficient current-carrying capacity in the jelly roll 200 caused by the small current-carrying area of the current collector 100, and further avoids a problem of severe heat generation in the jelly roll 200, to prolong the service life of the jelly roll 200 and improve the use safety of the jelly roll 200.

In some examples, the first connection portion 121 may be formed as a sector in FIG. 3. The sector shape may allow that the spacing between the opposite side walls of the first connection portion 121 gradually increases in the direction away from the central portion 122, to increase the area of the first connection portion 121.

Certainly, in some other examples, the first connection portion 121 may be further formed as a triangle, a rectangle, a circle, or the like. This is not specifically limited in this application.

Optionally, as shown in FIG. 3, on the first plane, an orthographic projection of an outer peripheral wall of the current collector 100 is located in a first circle. The first plane is perpendicular to the thickness direction of the current collector 100. A radial width of the second connection region 130 is W₁. The radial width of the second connection region 130 is greater than or equal to 1 mm and less than or equal to half of a radius of the current collector 100, that is, 1mm≤W₁≤½R₁. R₁ is the radius of the current collector 100, and R₁ ranges from 10 mm to 100 mm. It should be noted that the thickness direction of the current collector 100 herein may alternatively be understood as the height direction of the battery cell 1000. Therefore, the first plane may alternatively be understood as a height direction that is perpendicular to the battery cell 1000. In other words, the orthographic projection of the outer peripheral wall of the current collector 100 on a plane that is perpendicular to the thickness direction of the current collector 100 is located in the first circle, so that a shape of the current collector 100 is formed as a circular-like shape. The circular shape can make the shape of the current collector 100 match a shape of the jelly roll 200 and a shape of the housing 500, to reduce the difficulty in connecting the current collector 100 to the jelly roll 200 and the housing 500, and further increase the connection area, so that connection quality is ensured.

Therefore, the foregoing radial width of the second connection region 130 may be understood as a width of the second connection region 130 extending in a radial direction of the current collector 100 when the shape of the current collector 100 is formed as the circular-like shape. Because the second connection region 130 is disposed radially outside the first connection portion 121 and the radius of the current collector 100 is fixed, while ensuring that a connection area of the second connection region 130 can meet a minimum connection requirement through the foregoing disposition, it is further ensured that the first connection portion 121 has the sufficient connection area, so that the electrical connection between the jelly roll 200 and the housing 500 is implemented by using the current collector 100.

In addition, the radius R₁ of the current collector 100 is set to a range of 10 mm to 100 mm, to ensure that the size of the current collector 100 adapts to the jelly roll 200 and the housing 500 at the same time. This facilitates the electrical connection between the jelly roll 200 and the housing 500 by using the current collector 100, and ensures that the current collector 100 has sufficient connection areas with the jelly roll 200 and the housing 500.

Certainly, in some other examples, the radius of the current collector 100 is not limited to the foregoing 10 mm to 100 mm. A person skilled in the art may define the radius of the current collector 100 based on actual areas of the jelly roll 200 and the housing 500. This helps ensure that the current collector 100 has the sufficient connection areas with the jelly roll 200 and the housing 500.

The current collector 100 is disposed as a circular current collector, so that the shape of the current collector 100 can be adapted to the shape of the jelly roll 200 and the shape of housing 500, to reduce the difficulty in connecting the current collector 100 to the jelly roll 200 and the housing 500, and further ensure connection quality.

In some specific examples, with reference to FIG. 2 and FIG. 3, the central portion 122 is formed as a circular support plate. The plurality of first connection portions 121 are all formed as sector connection plates. The plurality of first connection portions 121 are connected radially outside of the central portion 122 and are spaced apart in the circumferential direction of the central portion 122. In this way, after the plurality of first connection portions 121 are connected to the central portion 122, the first connection region 120 may be formed as a circular shape, so that the shape of the first connection region 120 is adapted to the shape of the jelly roll 200, to increase a connection area between the first connection region 120 and the jelly roll 200.

Optionally, the battery cell 1000 is a cylindrical battery, so that a structure in the battery cell 1000 (the jelly roll 200 and the housing 500) can be adapted to the circular current collector.

Optionally, as shown in FIG. 3, in the first plane, orthographic projections of the outer peripheral walls of the plurality of first connection portions 121 are separately located on a second circle. A radius of the second circle is greater than or equal to half of the radius of the current collector 100 and less than the radius of the current collector 100, that is, the radius R₂ of the second circle and the radius R₁ of the current collector 100 satisfy the following condition: ½R₁≤R₂<R₁. The radius of the second circle herein may alternatively be understood as a radial dimension of the first connection region 120 when the first connection region 120 is formed as a circular shape. It should be noted that R₂ is set to be less than R₁, so that specific layout space can be reserved for the second connection region 130, and a specific area of the second connection region 130 is ensured, to increase the connection area between the second connection region 130 and the housing 500. R₂ is set to be greater than or equal to ½R₁, so that a specific area of the first connection region 120 is ensured, to increase the connection area between the first connection region 120 and the jelly roll 200.

In other words, in this application, a relationship between R₂ and R₁ is set, to ensure that the first connection portion 121 and the second connection region 130 both have a specific connection area, so that the current collector 100 is fastened to the jelly roll 200, the current collector 100 is fastened to the housing 500, and the large current-carrying area of the current collector 100 is ensured.

Optionally, as shown in FIG. 3, a radius of the central portion 122 is R₃, where 5mm<R₃<½R₂. It should be noted that the radius of the central portion 122 herein may alternatively be understood as a radial dimension of the central portion 122 when the central portion 122 is formed as the circular support plate. The radius of the first connection region 120 is a specific value, and a relationship between the radius R₃ of the central portion 122 and the radius R₂ is set, to ensure that the first connection portion 121 and the central portion 122 both have a specific connection area, so that the current collector 100 is fastened to the jelly roll 200, and the large current-carrying area of the current collector 100 is ensured.

Optionally, as shown in FIG. 2 and FIG. 3, on the first plane, the orthographic projection of the outer peripheral wall of the current collector 100 is located in the first circle. The first plane is perpendicular to the thickness direction of the current collector 100. The second connection region 130 is formed as a circular ring shape and is located radially outside the first connection region 120. The second connection region 130 is connected to the central portion 122 through the plurality of connection members 140. The plurality of first connection portions 121 are evenly spaced apart. Each of the first connection portions 121 is formed as a sector. The plurality of first connection portions 121 and the plurality of connection members 140 are alternately arranged in a circumferential direction. The circumferential direction herein may be understood as alternately arranged in the circumferential direction of the current collector 100. The plurality of connection members 122 and the plurality of first connection portions 121 are disposed to be alternately arranged in the circumferential direction, so that space in the current collector 100 is properly utilized, and the current collector 100 is disposed to form a circular structure. This facilitates the electrical connection between the jelly roll 200 and the housing 500 by using the current collector 100, ensures the connection area is ensured, improves performance of the battery cell 1000, and enhances structural stability of the battery cell 1000.

In some examples, a product of the quantity of first connection portions 121, a compensation coefficient, a current-carrying coefficient of the first connection portion 121, and a minimum connection area between the first connection portion 121 and the jelly roll 200 is greater than or equal to the minimum current-carrying requirement of the jelly roll 200. In other words, the minimum connection area S between the first connection portion 121 and the jelly roll 200 and the minimum current-carrying requirement C of the jelly roll 200 satisfy the following relational expression: nNKS≥C; where n is the quantity of the first connection portions 121, N is the compensation coefficient, N ranges from 0.7 to 1, and K is the current-carrying coefficient of the first connection portion 121.

It should be noted that K may be directly determined based on a material of the first connection portion 121 and is in units of Ah/mm². The foregoing setting ensures that the current-carrying capacity of the current collector 100 can meet the minimum current-carrying requirement of the jelly roll 200. This avoids the insufficient current-carrying capacity in the jelly roll 200, and avoids the problem of severe heat generation in the jelly roll 200, to prolong the service life of the jelly roll 200 and improve the use safety of the jelly roll 200.

It should be noted that, in the foregoing relational expression, the minimum current-carrying requirement C of the jelly roll 200 may be determined based on the required charging time of the jelly roll 200. A specific determining manner is that during the actual production process of the battery cell 1000, a fast charging time that needs to be met by a to-be-produced battery cell 1000 may be directly determined. In other words, the charging time of the battery cell 1000 may be clearly learned. The charging time of the jelly roll 200 is determined based on the charging time of the battery cell 1000. Then, the minimum current-carrying requirement C of the jelly roll 200 is obtained based on the charging time of the jelly roll 200. Finally, the minimum connection area S between the first connection portion 121 and the jelly roll 200 is calculated based on the minimum current-carrying requirement C. In this way, the minimum connection area S between the first connection portion 121 and the jelly roll 200 and the minimum current-carrying requirement C of the jelly roll 200 can meet a specific condition. This ensures that the current-carrying capacity of the current collector 100 can meet the minimum current-carrying requirement of the jelly roll 200, to avoid causing the insufficient current-carrying capacity in the jelly roll 200, and to avoid the problem of severe heat generation in the jelly roll 200, so that service life of the jelly roll 200 is prolonged, and the use safety of the jelly roll 200 is improved. The connection area between the first connection portion 121 and the jelly roll 200 may be measured and calculated by a connection trace, for example, by a welding mark. The distinguishing boundary between the first connection portion 121 and the central portion 122 may be the straight line connecting the opposite side walls at the connection position of the first connection portion 121 and the central portion 122.

In some examples, to ensure that an operator can effectively determine whether the minimum connection area S between the first connection portion 121 and the jelly roll 200 meets the requirement, after the minimum connection area S between the first connection portion 121 and the jelly roll 200 is calculated, the minimum connection region may be disposed on the first connection portion 121. When the minimum connection regions are all connected to the jelly roll 200, it is determined that an effective connection area between the first connection portion 121 and the jelly roll 200 meets the requirement.

Optionally, the first connection portion 121 is provided with a plurality of positioning parts, for example, a positioning groove or a positioning protrusion. A region enclosed by the plurality of positioning parts forms the minimum connection region.

In some examples, an area of an orthographic projection of the first connection portion 121 on the first plane is S₁, and the minimum connection area between the first connection portion 121 and the jelly roll 200 is S. The minimum connection area between the first connection portion 121 and the jelly roll 200 is equal to a product of the area of the orthographic projection of the first connection portion 121 on the first plane and γ, that is, S=γS₁, 0.2≤γ≤1. The thickness direction of the current collector 100 is perpendicular to the first plane. In other words, the minimum connection area between the first connection portion 121 and the jelly roll 200 may be smaller than the area of the orthographic projection of the first connection portion 121 on the first plane. However, it is still ensured that the first connection portion 121 and the jelly roll 200 have a sufficient connection area, to ensure the current-carrying capacity of the current collector 100.

In addition, the minimum connection area between the first connection portion 121 and the jelly roll 200 may be set to be less than the area of the orthographic projection of the first connection portion 121 on the first plane, so that a difficulty in connecting the current collector 100 to the jelly roll 200 may be reduced, and assembly efficiency of the battery cell 1000 is further improved.

In some embodiments of this application, the first connection portion 121 has a first surface connected to the jelly roll 200. The second connection region 130 has a second surface connected to the housing 500. The first surface and the second surface are parallel to each other. It may be understood that the first connection portion 121 has the first surface, and the first connection portion 121 is adapted to be connected to the jelly roll 200 through the first surface, so that the first connection portion 121 is electrically connected to the jelly roll 200. Correspondingly, the second connection region 130 has the second surface, and the second connection region 130 is adapted to be connected to the housing 500 through the second surface, so that the second connection region 130 is electrically connected to the housing 500, to achieve an objective of implementing the electrical connection between the jelly roll 200 and the housing 500 by using the current collector 100.

It should be noted that, in a process of assembling the battery cell 1000, a side surface that is of the jelly roll 200 and that faces the housing 500 is generally disposed in parallel with a side surface that is of the housing 500 and that faces the jelly roll 200. Therefore, in this application, after the first surface is disposed in parallel with the second surface and it is ensured that the first surface is connected to the jelly roll 200, the second surface can be effectively connected to the housing 500, so that the connection area between the first connection region 120 and the jelly roll 200 is ensured, the connection area between the second connection region 130 and the housing 500 is ensured, the electric connection between the jelly roll 200 and the housing 500 is effectively implemented, and the connection difficulty is reduced.

In some examples, a surface that is of the first connection portion 121 and that faces the jelly roll 200 is defined as the first surface, to facilitate an interconnection between the first surface and the jelly roll 200. Correspondingly, a surface that is of the second connection region 130 and that faces the cover plate 300 is defined as the second surface, to facilitate an interconnection between the second surface and the housing 500.

In some embodiments of this application, as shown in FIG. 2, FIG. 3, and FIG. 5, on the first plane, the orthographic projection of the outer peripheral wall of the current collector 100 is located in the first circle. The first plane is perpendicular to the thickness direction of the current collector 100. The second connection region 130 is provided with a stop protrusion 1313. The stop protrusion 1313 extends toward the first connection portion 121. The stop protrusion 1313 is located radially outside the first connection portion 121. The stop protrusion 1313 is adapted to be located radially outside the tab of the jelly roll 200. A radially outer side of the first connection portion 121 herein may be understood as a side that is the first connection portion 121 and that is close to a radially outer side of the current collector 100 when the shape of the current collector 100 is formed as the circular-like shape. The stop protrusion 1313 may reinforce the second connection region 130. In other words, the structural strength of the second connection region 130 is enhanced, deformation is avoided when the second connection region 130 is connected to the housing 500, and it is ensured that the second connection region 130 can be stably connected to the housing 500. In addition, this facilitates definition a position of the tab by using the second connection region 130, so that the tab can be stably disposed on the jelly roll 200, and failure of the jelly roll 200 caused by loosening or pulling of the tab on a weld seam is prevented under actual operating conditions.

Moreover, cooperation of the stop protrusion 1313 may further define the position of the tab, to further ensure that the tab can be stably disposed on the jelly roll 200. In addition, cooperation of a plurality of stop protrusions 1313 may further protect the tab, to prolong a service life of the tab. In other words, the service life of the jelly roll 200 is prolonged.

Optionally, as shown in FIG. 2 and FIG. 3, the stop protrusion 1313 extends in a circumferential direction of the second connection region 130. It may alternatively be understood that the stop protrusion 1313 extends in the circumferential direction of the current collector 100 formed as a circular shape, to increase an area of the stop protrusion 1313. It is ensured that the structural strength of the second connection region 130 can be effectively enhanced by using the stop protrusion 1313, the position of the tab can be effectively defined by the stop protrusion 1313 at the same time, and the tab can further be stably disposed on the jelly roll 200.

Certainly, in some other examples, there are the plurality of stop protrusions 1313. The plurality of stop protrusions 1313 are spaced apart in the circumferential direction of the second connection region 130. In this way, the structural strength of the second connection region 130 is enhanced and the position of the tab is defined by using the stop protrusion 1313.

Optionally, an extension length of the stop protrusion 1313 extending toward the first connection portion 121 is greater than or equal to an exposed height of the tab, to ensure that the stop protrusion 1313 can effectively protect the tab and define a position of the tab.

In a specific example, the exposed height of the tab ranges from 0.5 mm to 2 mm. In other words, the extension length of the stop protrusion 1313 extending toward the first connection portion 121 is greater than 0.5 mm.

Optionally, the stop protrusion 1313 is defined by bending and deforming a portion of the second connection region 130. In other words, in a process of manufacturing the second connection region 130, a portion of a structure of the second connection region 130 is bent and deformed to form the stop protrusion 1313. In this way, there is no need to separately connect a structural member to the second connection region 130 to form the stop protrusion 1313, so that manufacturing difficulty of the stop protrusion 1313 is reduced. In other words, the manufacturing difficulty of the second connection region 130 is reduced, and positional stability of the stop protrusion 1313 can be improved at the same time.

Optionally, as shown in FIG. 2 and FIG. 3, an outer periphery of the second connection region 130 is further provided with an avoidance opening 1312 for circulating a fluid. The avoidance opening 1312 is configured to implement communication between two opposite ends of the second connection region 130, to ensure that gas in the jelly roll 200 can smoothly flow.

In other words, the avoidance opening 1312 in this application is adapted to form an exhaust passage.

Optionally, as shown in FIG. 3, a plurality of avoidance openings 1312 are evenly spaced apart. In this way, cooperation of the plurality of avoidance openings 1312 can ensure that the gas in the jelly roll 200 can be more evenly distributed.

It should be noted that FIG. 3 shows that the avoidance opening 1312 is formed as a rectangle-like shape. In some other examples, the avoidance opening 1312 may alternatively form a circle, a triangle, and the like. This application is not specifically limited.

It should be further noted that a specific quantity of the plurality of avoidance openings 1312 is not limited in this application. A person skilled in the art may set the quantity of avoidance openings 1312 based on a gas production amount inside the jelly roll 200.

Optionally, as shown in FIG. 3, a width of the avoidance opening 1312 is W₂, where 0.5mm≤W₂≤5mm. It should be noted that the width of the avoidance opening 1312 herein may be understood as a width of the avoidance opening 1312 extending in the radial direction of the current collector 100. When W₂<0.5mm, an exhaust capability of the avoidance opening 1312 is reduced. When W₂>5mm, manufacturing difficulty of the avoidance opening 1312 is increased, and the connection area between the second connection region 130 and the housing 500 is affected at the same time.

Therefore, in this application, a radial width W₂ of the avoidance opening 1312 is set to be greater than or equal to 0.5 mm and less than or equal to 5 mm. While ensuring that the avoidance opening 1312 can smoothly discharge the gas inside the jelly roll 200, it is further ensured that the avoidance opening 1312 can be better shaped. In addition, the area of the second connection region 130 is ensured, that is, the connection area between the second connection region 130 and the housing 500 is ensured.

Optionally, as shown in FIG. 2 and FIG. 3, a reinforcing portion 1311 is disposed on an outer periphery of the stop protrusion 1313. The reinforcing portion 1311 is used to improve structural strength of the stop protrusion 1313 and the second connection region 130, avoid deformation when the second connection region 130 is connected to the housing 500, and further ensure that the stop protrusion 1313 can effectively protect the tab and define the position of the tab.

Optionally, as shown in FIG. 2 and FIG. 3, there are a plurality of reinforcing portions 1311. The plurality of reinforcing portions 1311 are spaced apart. Cooperation of the plurality of reinforcing portions 1311 are used to maximize enhancement of the structural strength of the stop protrusion 1313 and the second connection region 130.

Optionally, as shown in FIG. 2 and FIG. 3, the avoidance opening 1312 is formed between two adjacent reinforcing portions 1311. In other words, only the two adjacent reinforcing portions 1311 need to be spaced apart. In this way, the two adjacent reinforcing portions 1311 cooperate to implement that the outer periphery of the second connection region 130 is provided with the avoidance opening 1312, without a need to separately process the second connection region 130 to form the avoidance opening 1312, so that the manufacturing difficulty of the avoidance opening 1312 is reduced, that is, the manufacturing difficulty of the second connection region 130 is reduced, and manufacturing efficiency of the second connection region 130 can be further improved at the same time.

In some embodiments of this application, as shown in FIG. 2 and FIG. 3, the central portion 122 is provided with a liquid injection port 1221 penetrating the central portion 122 in a thickness direction of the central portion 122. Herein, the first connection region 120 is provided with the liquid injection port 1221. The liquid injection port 1221 penetrates the first connection region 120 in a thickness direction of the first connection region 120, to implement communication between two sides of the first connection region 120 in the thickness direction. This facilitates injection of liquid into the jelly roll 200 through the liquid injection port 1221.

In other words, while the current collector 100 in this application is electrically connected to the jelly roll 200, it can also be ensured that the liquid can be normally injected into the jelly roll 200.

In addition, the liquid injection port 1221 is provided on the central portion 122, so that the liquid injection port 1221 can be disposed close to a middle portion of the jelly roll 200. This facilitates the injection of the liquid into the jelly roll 200 through the liquid injection port 1221.

Optionally, as shown in FIG. 2, the liquid injection port 1221 includes a through opening 1222 and a positioning opening 1223 that are communicated with each other. The through opening 1222 facilitates the injection of the liquid into the jelly roll 200. The positioning opening 1223 is adapted to cooperate with a tooling device to avoid rotation of the current collector 100 in an installation process. Through the foregoing disposition, it can be ensured that the liquid injection port 1221 is convenient for injecting the liquid toward the jelly roll 200, and also convenient for positioning the current collector 100, to reduce the difficulty in connecting the current collector 100 to the jelly roll 200, improve the connection efficiency, and ensure that the current collector 100 can be accurately connected to the jelly roll 200.

In addition, the positioning opening 1223 can also prevent the current collector 100 from rotating relative to the jelly roll 200, to improve position stability of the current collector 100.

In a specific example, the through opening 1222 is formed as a circular opening, to facilitate the injection of the liquid toward the jelly roll 200 through the through opening 1222, and ensure a liquid injection amount. The positioning opening 1223 is formed as a rectangular opening, so that the positioning opening 1223 is used to cooperate with the tooling device to avoid rotation of the current collector 100 in the installation process, to reduce installation difficulty of the current collector 100.

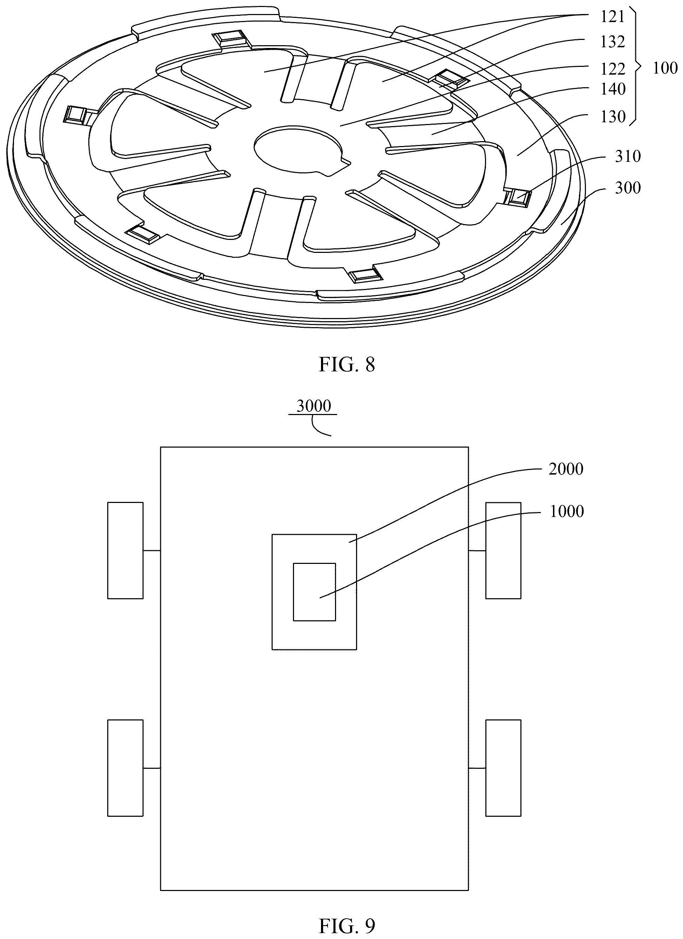

In some examples, as shown in FIG. 7 and FIG. 8, the second connection region 130 is provided with a limiting notch 132. The limiting notch 132 is adapted to be in limiting cooperation with a limiting protrusion 310 provided on the housing 500. In other words, the housing 500 is provided with the limiting protrusion 310. The second connection region 130 is provided with the limiting notch 132. After the limiting protrusion 310 is in the limiting cooperation with the limiting notch 132, the second connection region 130 is in positioning cooperation with the housing 500, to avoid relative position change of the second connection region 130 and the housing 500 in a connection process, so that the difficulty in connecting the second connection region 130 to the housing 500 is reduced, and the connection efficiency is improved.

Optionally, with reference to FIG. 3 and FIG. 7, the radial width of the second connection region 130 is W₁, and a radial width W₃ of the limiting notch 132 meets the following condition: 0.5mm≤W₃<W₁. In other words, the limiting notch 132 has a specific width in the radial direction of the current collector 100 formed as the circular shape, to facilitate formation of the limiting notch 132, so that the second connection region 130 is in the positioning cooperation with the housing 500 through the limiting notch 132. In addition, the radial width of the limiting notch 132 is set to be less than the radial width of the second connection region 130. This can avoid reducing the structural strength of the connection area of the second connection region 130 due to the formation of the limiting notch 132, so that the second connection region 130 has specific structural strength, a service life is prolonged, and a specific connection area between the second connection region 130 and the housing 500 is ensured.

Optionally, as shown in FIG. 7, a circumferential length of the limiting notch 132 is G₂, where 0.5mm≤G₂≤ΠR₁/n₁. n₁ is a quantity of the limiting notches 132, Π is a pi, and Π≈3.14. While it is ensured that the limiting notch 132 has a specific extension length to cooperate with the limiting protrusion, the area of the second connection region 130 can be further prevented from being excessively reduced due to deposition of the limiting notch 132. In other words, the second connection region 130 and the housing 500 have the specific connection area, to facilitate a fastening connection between the current collector 100 and the housing 500.

Optionally, as shown in FIG. 7, there are a plurality of limiting notches 132, and the plurality of limiting notches 132 are disposed one-to-one opposite to the plurality of first connection portions 121 in a radial direction of the second connection region 130. The plurality of limiting notches 132 are disposed, so that it is ensured that the second connection region 130 can effectively be in the positioning cooperation with the housing 500. The plurality of limiting notches 132 are disposed one-to-one opposite to the plurality of first connection portions 121, so that the limiting notch 132 can be disposed away from the connection member 140, to avoid the limiting notch 132 affecting the fastening connection between the second connection region 130 and the central portion 122. In other words, while it is ensured that the limiting notch 132 can effectively implement the positioning cooperation between the second connection region 130 and the housing 500, and it can further ensure that the second connection region 130 can be effectively fastened to the central portion 122, to improve the position stability and the structural strength of current collector 100.

It should be noted that the figure shows a case in which an orthographic projection of the limiting notch 132 on the first plane is formed as a rectangle. In another example, the orthographic projection of the limiting notch 132 on the first plane is formed as a square, a triangle, a sector, and the like.

The following describes a battery pack 2000 in the embodiment of this application.

The battery pack 2000 according to an embodiment of this application includes a plurality of battery cells 1000. Each battery cell 1000 is the foregoing battery cell 1000.

It can be learned from the foregoing structure that the battery pack 2000 in this embodiment of this application uses the foregoing battery cell 1000, to improve structural stability of the battery pack 2000, prolong a service life of the battery pack 2000, and improve use safety of the battery pack 2000 at the same time.

The following describes an electric apparatus 3000 in the embodiment of this application.

As shown in FIG. 9, the electric apparatus 3000 according to an embodiment of this application includes a battery pack 2000. The battery pack 2000 is the foregoing battery pack 2000.

It can be learned from the foregoing structure that the electric apparatus 3000 in this embodiment of this application uses the foregoing battery pack 2000, that is, the electric apparatus 3000 uses the foregoing battery cell 1000, to improve use safety of the electric apparatus 3000, further prolong a service life of the electric apparatus 3000, and reduce use costs.

It should be noted that the electric apparatus 3000 herein may be a vehicle, an energy storage cabinet, a ship, an aircraft, or the like.

FIG. 2 and FIG. 3 both show six first connection portions 121 for illustrative purposes. However, after reading the above technical solution, a person of ordinary skill can obviously understand that this solution is expanded to a solution with another quantity of first connection portions 121, which also falls within the protection scope of this application.

Other configurations of the battery cell 1000, the battery pack 2000, and the electric apparatus 3000 according to the embodiment of this application are known to a person of ordinary skill in the art. Details are not described herein again.

Although embodiments of this application have been shown and described, the person of ordinary skill in the art can understand that various changes, modifications, substitutions, and variations may be made to these embodiments without departing from the principles and purposes of this application. The scope of this application is defined by the claims and equivalents thereof.

## Claims

1. A battery cell, comprising:
a housing, wherein an accommodation cavity is formed in the housing;
a jelly roll, wherein the jelly roll is disposed in the accommodation cavity; and
a current collector, wherein the current collector comprises a first connection region and a second connection region, the first connection region comprises a central portion and a plurality of first connection portions, the plurality of first connection portions are sequentially arranged in a circumferential direction of the central portion, the plurality of first connection portions are separately connected to the central portion, the plurality of first connection portions are electrically connected to the jelly roll, the second connection region is located on a side of the first connection region, and the second connection region is electrically connected to the housing, wherein
a straight-line distance between opposite side walls at a connection position of the first connection portion and the central portion is a connection width H, a product of a quantity of the first connection portions, a current-carrying coefficient of the current collector, the straight-line distance between the opposite side walls at the connection position of the first connection portion and the central portion, and a thickness of the first connection portion is greater than or equal to a minimum current-carrying requirement of the jelly roll, that is, the following relational expression is satisfied: nKHδ≥C; and
C is the minimum current-carrying requirement of the jelly roll, n is the quantity of the first connection portions, δ is the thickness of the first connection portion, and K is the current-carrying coefficient of the current collector.

2. The battery cell according to claim 1, wherein the central portion and the plurality of first connection portions are integrally formed.

3. The battery cell according to claim 1 or 2, wherein the second connection region is formed as a circular ring structure, and the circular ring structure extends in a circumferential direction of the first connection region.

4. The battery cell according to claim 3, wherein an inner peripheral wall of the second connection region is connected to the central portion through a connection member.

5. The battery cell according to claim 4, wherein the connection member is inclined relative to the central portion, and extends toward the second connection region, so that the first connection region and the second connection region have a height difference.

6. The battery cell according to claim 5, wherein in the circumferential direction of the first connection region, the plurality of first connection portions and a plurality of connection members are alternately spaced apart.

7. The battery cell according to claim 6, wherein a circumferential distance between the first connection portion and the connection member ranges from 0.5 mm to 2 mm.

8. The battery cell according to any one of claims 3 to 7, wherein on a first plane, an orthographic projection of an outer peripheral wall of the current collector is located in a first circle, the first plane is perpendicular to a thickness direction of the current collector, a radial width of the second connection region is W₁, the radial width of the second connection region is greater than or equal to 1 mm and less than or equal to half of a radius of the current collector, that is, 1mm≤W₁≤½R₁, R₁ is the radius of the current collector, and R₁ ranges from 10 mm to 100 mm.

9. The battery cell according to claim 8, wherein on the first plane, orthographic projections of outer peripheral walls of the plurality of first connection portions are separately located in a second circle, and a radius of the second circle is greater than or equal to half of the radius of the current collector and less than the radius of the current collector, that is, the radius R₂ of the second circle and the radius R₁ of the current collector satisfy the following condition: ½R₁≤R₂<R₁.

10. The battery cell according to any one of claims 1 to 9, wherein the first connection portion has a first surface connected to the jelly roll, the second connection region has a second surface connected to the housing, and the first surface and the second surface are parallel to each other.

11. The battery cell according to any one of claims 1 to 10, wherein on the first plane, the orthographic projection of the outer peripheral wall of the current collector is located in the first circle, the first plane is perpendicular to the thickness direction of the current collector, the second connection region is provided with a stop protrusion extending toward the first connection portion, the stop protrusion is located radially outside of the first connection portion, and the stop protrusion is adapted to be located radially outside of a tab of the jelly roll.

12. The battery cell according to claim 11, wherein the stop protrusion is defined by bending and deforming a portion of the second connection region.

13. The battery cell according to any one of claims 1 to 12, wherein the central portion is provided with a liquid injection port penetrating the central portion in a thickness direction of the central portion.

14. The battery cell according to any one of claims 1 to 13, wherein on the first plane, the orthographic projection of the outer peripheral wall of the current collector is located in the first circle, the first plane is perpendicular to the thickness direction of the current collector, the second connection region is formed as a circular ring shape and is located radially outside the first connection region, the second connection region is connected to the central portion through the plurality of connection members, the plurality of first connection portions are evenly spaced apart, each of the first connection portions is formed as a sector, and the plurality of first connection portions and the plurality of connection members are alternately arranged in a circumferential direction.

15. A battery pack, comprising a plurality of battery cells according to any one of claims 1 to 14.

16. An electric apparatus, comprising the battery pack according to claims 15.
